(19) Europäisches Patentamt / European Patent Office / Office européen des brevets

(11) **EP 3 752 718 B1**

(12) **FASCICULE DE BREVET EUROPÉEN**

(45) Date de publication et mention
de la délivrance du brevet:
**29.12.2021 Bulletin 2021/52**

(21) Numéro de dépôt: **19711404.4**

(22) Date de dépôt: **15.02.2019**

(51) Int Cl.:
*F01D 9/04* (2006.01)    *F02C 7/045* (2006.01)
*F15D 1/00* (2006.01)

(86) Numéro de dépôt international:
**PCT/FR2019/050352**

(87) Numéro de publication internationale:
**WO 2019/158877 (22.08.2019 Gazette 2019/34)**

(54) **TURBOMACHINE À SOUFFLANTE AVANT**

STRÖMUNGSMASCHINE MIT VORDEREM GEBLÄSE

TURBOMACHINE WITH FRONT FAN

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.02.2018 FR 1851361**

(43) Date de publication de la demande:
**23.12.2020 Bulletin 2020/52**

(73) Titulaire: **SAFRAN AIRCRAFT ENGINES
75015 Paris (FR)**

(72) Inventeurs:
• **GEA AGUILERA, Fernando
77550 Moissy-Cramayel (FR)**
• **FIACK, Matthieu
77550 Moissy-Cramayel (FR)**
• **GRUBER, Mathieu, Simon, Paul
77550 Moissy-Cramayel (FR)**

(74) Mandataire: **Ernest Gutmann - Yves Plasseraud
S.A.S.
c/o Plasseraud IP
66, rue de la Chaussée d'Antin
75440 Paris Cedex 09 (FR)**

(56) Documents cités:
**EP-A2- 1 277 966    CN-A- 101 716 995**

# EP 3 752 718 B1

**Description**

DOMAINE TECHNIQUE

L'invention concerne le domaine de la gestion aéro-acoustique d'aubes fixes dans une turbomachine pour aéronef ou dans un banc d'essai de turbomachine pour aéronef. Plus spécifiquement, l'invention concerne une turbomachine à soufflante avant.

ÉTAT DE LA TECHNIQUE ANTÉRIEURE

Ce type d'aube fixe se retrouve par exemple sur des aubes directrices de sortie OGV (outlet guide vane), ou redresseurs, disposés en aval d'un corps tournant pour redresser le flux d'air. On parlera d'aube de stator pour désigner une aube fixe, à l'inverse des aubes en rotation.

Un exemple sera donné pour une turbomachine double flux avec une soufflante (avant) et un redresseur disposé en veine secondaire.

Dans un certain nombre de moteurs turbofans, dont notamment les turboréacteurs Ultra-High Bypass Ratio (UHBR; configuration de moteur à soufflante carénée à très haut taux de dilution, au-delà de 15), il est envisagé d'augmenter le diamètre de la soufflante et de réduire la longueur de la nacelle par laquelle la turbomachine est suspendue à l'aéronef, diminuant ainsi la distance entre la soufflante et les aubes directrices d'entrée IGV (Inlet Guide Vanes), les OGV et le bec. Dans ce type de moteur, l'interaction du sillage de la soufflante avec les IGV, les OGV et le bec est une des sources de bruit à large bande dominante. En conséquence, des nouvelles solutions techniques doivent être analysées pour maintenir et réduire les niveaux acoustiques actuels. CN101 716 995 A divulgue une turbomachine selon le préambule de la revendication 1.

EXPOSÉ DE L'INVENTION

Est ainsi concernée par l'invention une turbomachine à soufflante (avant) et qui présente un axe général (X) autour duquel peut tourner la soufflante, la turbomachine comportant :

- une paroi annulaire de séparation pourvue d'un bec, pour la séparation d'un flux d'air, en aval de la soufflante, entre un flux primaire (Fp) et un flux secondaire (Fs), le bec présentant un bord d'attaque,
- des premières aubes (IGV) fixes de guidage du flux primaire,
- des secondes aubes (OGV) fixes de guidage du flux secondaire.

L'interaction entre l'écoulement mis en rotation par la soufflante et le redresseur dans la veine secondaire est à l'origine d'une source de bruit supposée prédominante sur le bruit total généré par la turbomachine, voire par l'aéronef selon les régimes de fonctionnements.

Dans ce contexte, pour au moins limiter tout ou partie des problèmes ci-avant mentionnés, il est proposé que le bord d'attaque du bec de ladite paroi annulaire de séparation présente un profil à serrations présentant une succession de dents et de creux.

En d'autres termes, il est proposé ici d'utiliser un bec à bord d'attaque ondulé pour réduire le bruit d'interaction entre le sillage des aubes de la soufflante et le bec. Il est à ce sujet à noter que la distance axiale entre le bec et le bord de fuite des aubes de la soufflante est relativement courte, et que donc le bec peut être est exposé à des niveaux de turbulence d'air plus élevés que ceux perçus par les OGVs et IGVs.

Pour les profils aérodynamiques à bord d'attaque à serrations, c'est-à-dire ondulé, quelle que soit la forme de ces ondulations (voir ci-après), le bruit d'interaction avec un écoulement turbulent est en particulier produit au niveau des creux des ondulations, là où les fluctuations de pression sont plus intenses.

Un but corollaire est donc d'optimiser la géométrie des ondulations pour réduire le bruit rayonné par un bec à bord d'attaque ondulé en minimisant la corrélation entre les sources de bruit et le fond des creux.

Pour réduire cette corrélation, tout ou partie de trois critères ont été considérés comme à prendre en considération, pour définir les ondulations, lesquelles pourraient être de type sinusoïdal ou triangulaire, entre autres.

Plus précisément, il est proposé d'alors considérer un profil à serrations présentant des ondulations :

- qui définissent :

-- suivant une direction d'allongement du bord d'attaque, une géométrie élémentaire qui se répète (profil obéissant donc à une loi périodique), deux ondulations identiques de deux géométries élémentaires successives suivant ladite direction présentant entre elles, suivant cette direction, une distance, $\lambda$ (en m),

2

-- et une amplitude maximale, h (en m), perpendiculairement à ladite direction, et

- qui obéissent à l'un au moins des critères a), b), c) suivants :

a) l'amplitude maximale est dimensionnée en respectant la relation :

$$l_{ij}^{(k)}/h < 1$$

à 40% près, dans la formule :

$$l_{ij}^{(k)} = \int\limits_0^\infty \frac{\langle u_i'(\mathbf{x}+r\mathbf{e}_k)u_j'(\mathbf{x})\rangle}{\langle u_i'(\mathbf{x})u_j'(\mathbf{x})\rangle}dr$$

avec :

-- $u'_i$ (en m/s) qui est la vitesse du flux d'air dans la direction i, entre la soufflante et les premières aubes (5, IGV),
-- r qui est la distance (en m) entre deux points du sillage - de la soufflante -, dans la direction k,
--

$$l_{ij}^{(k)}$$

qui est l'échelle intégrale du flux d'air généré par la soufflante :

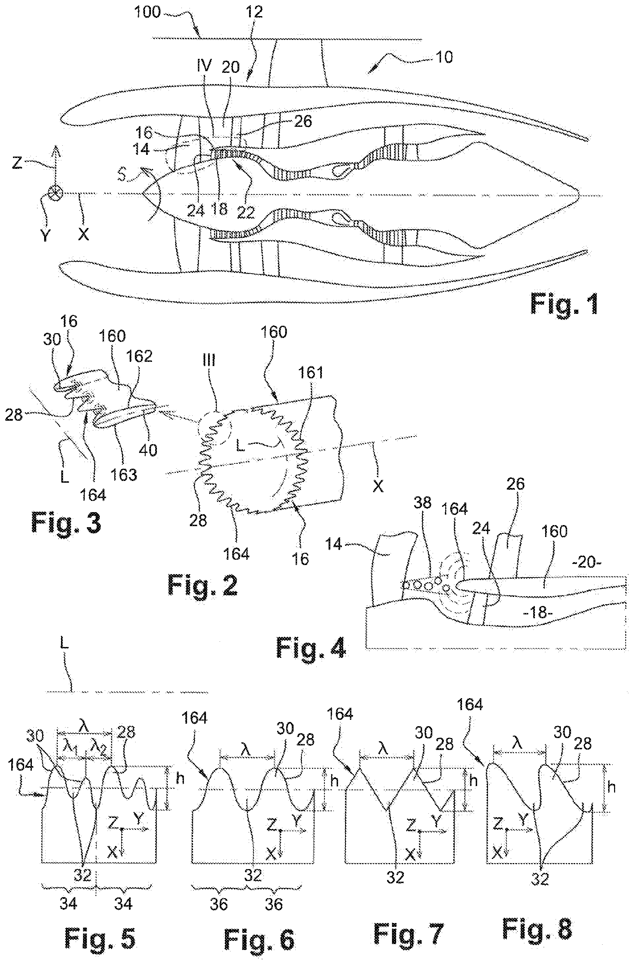

--- dans (parallèlement à) l'axe général de la turbomachine (axe X figure 2), ou
--- dans la direction d'une corde du profil (si une telle corde existe ; cf. repère 40 figure 3),

b) ladite distance ($\lambda$) (autrement dit la périodicité ou l'espacement entre deux dents consécutives) respecte la relation suivante :

$$e < \lambda \leq d - e \quad \text{où} \quad d/\lambda \neq 1, 2, 3, \dots,$$

avec :

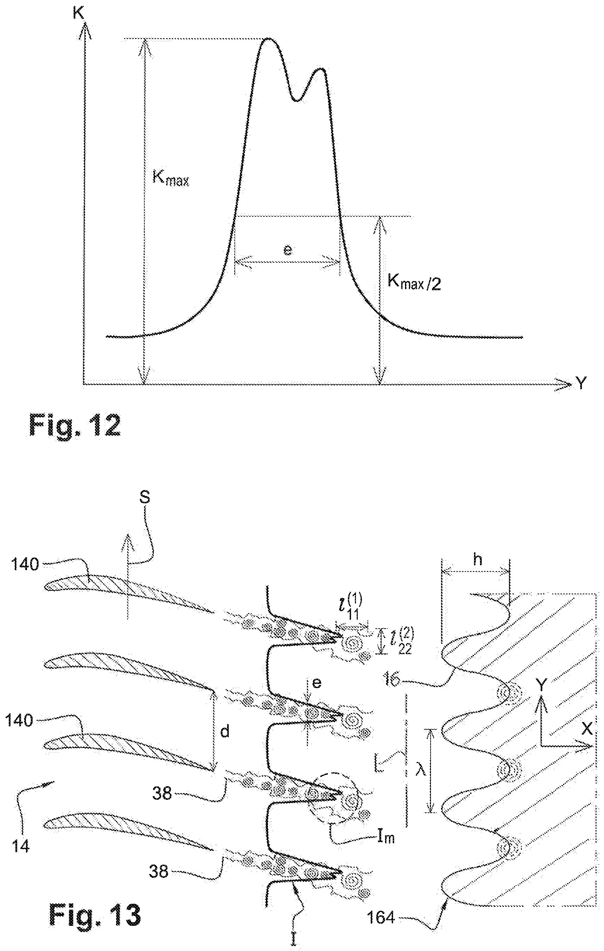

-- $\underline{e}$ qui est la largeur (en m) caractéristique du déficit de sillage (flux d'air) généré par la soufflante en aval d'une aube de cette soufflante, ladite largeur étant calculée au point où l'on retrouve la moitié de l'énergie cinétique turbulente maximale, K_max, dans la partie correspondante du flux d'air généré, donc dans ledit sillage ; $\underline{e}$ pouvant être estimé à partir du critère $\underline{e} = l_{22}^{(2)}/0{,}21$ (où $l_{22}^{(2)}$ est l'échelle intégrale du flux d'air généré par la soufflante dans la direction circonférentielle), à 40% près, et
-- $\underline{d}$ qui est l'espacement (en m) entre deux aubes de soufflante consécutives circonférentiellement, (voir Figure 13),

c) le nombre de dents, de creux, ou de périodes de répétition de la géométrie élémentaire sur la longueur du bord d'attaque du profil à serrations est égal, à 40% près, au nombre des premières aubes (IGV).

Dans le présent texte :

- les paramètres dimensionnels (amplitude, distance, vitesse...etc) sont à considérer en unité SI, et

- la marge « à 40% près » pourra être réduite à 10% près, si nécessaire. Il en résultera une réduction accrue du bruit rayonné par ledit bec à bord d'attaque ondulé de séparation des flux, en régime de rotation constant de la soufflante avant.

Par ailleurs, concernant les indices ou exposants (i, j, k) dans les formules du présent texte, on, notera dès à présente que, par exemple, la figure 13 montre des profils d'aubes 140 de la soufflante, ainsi que le sillage du flux en aval et un bec 16, où, si les indices (i, j, k) :

- sont égaux à 1, ils correspondent à la direction "X" (axe général de la turbomachine),
- sont égaux à 2, ils correspondent à la direction "Y" (circonférentielle).

Ainsi, la direction d'allongement du bord d'attaque du bec 16 (L figure 2 ou 13) correspond à la direction circonférentielle « Y », ou à l'exposant « 2 » de $l_{22}^{(2)}$ sur la figure 13.

On aura en outre compris que « r » est la variable d'intégration dans l'équation ci-avant relative à

$$l_{22}^{(2)},$$

pour le calcul de l'échelle intégrale.

S'il n'y a pas strictement de « corde » comme dans le cas d'un bec (repéré 16 ci-après) de séparation entre les flux primaire et secondaire, on considèrera que « dans la direction de la corde (repérée 40 ci-après) du profil » correspond, dans ce cas, à la direction dudit axe général.

Normalement, au moins avec un profil à géométrie élémentaire périodique non excessivement torturé, il doit s'avérer que l'écoulement ou flux d'air généré par la soufflante contourne le bord d'attaque ondulé au niveau des (sommets des) dents pour s'accélérer près des creux.

Dans ce cas, pour éviter d'avoir des zones de turbulences et/ou de survitesses trop importantes au niveau de la zone carter du bord d'attaque des premières aubes (IGV), il est proposé qu'autour dudit axe général (X), certains au moins des creux du profil à serrations soient décalés angulairement par rapport à la position angulaire des premières aubes (IGV), de telle sorte que ces (certains au moins des) creux soient angulairement interposés entre deux premières aubes (IGV) circonférentiellement successives.

Le flux d'air généré axialement en aval la soufflante est tourbillonnant et est fortement influencé par le sens de rotation et la vitesse de rotation de la soufflante.

Pour en tenir compte afin que les surfaces des dents puissent être aussi pleinement actives que possible dans l'effet acoustique attendu, il est proposé que les dents se développent individuellement de façon inclinée par rapport à une parallèle audit axe général (X), de sorte à être orientées vers la direction de rotation - globalement oblique par rapport audit axe X - de l'écoulement tournant généré donc par la rotation de la soufflante. Autrement dit :

- la soufflante est adaptée à tourner dans un sens prédéterminé autour de l'axe général précité (X), de sorte que le flux d'air en aval de la soufflante sera globalement orienté obliquement par rapport à cet axe (X), et
- les dents pourront alors être, circonférentiellement autour dudit axe général (X), inclinées vers l'orientation globalement oblique du flux d'air en aval de la soufflante, pour lui faire globalement face.

Il est aussi possible que les dents soient inclinées dans la direction de la cambrure des IGV, car la direction du flux d'air peut varier en fonction de la vitesse de rotation de la soufflante.

Dans les deux cas, les dents seront de fait individuellement non symétriques axialement par rapport à une parallèle audit axe général (X) passant par le sommet de la dent considérée.

A priori l'inclinaison sera la même pour toutes les dents, même si des inclinaisons différentes suivant les dents est possible.

Encore pour tenir compte de l'influence de la rotation de la soufflante, et pour limiter l'impact acoustique sur les IGV dudit flux d'air tourbillonnant, il est aussi proposé :

- a) que lesdites secondes aubes (IGV) présentent globalement une ligne de cambrure moyenne, certaines au moins des dents soient, circonférentiellement autour dudit axe général (X), orientées globalement dans la direction d'une tangente à la ligne de cambrure moyenne de ces IGV, au niveau des bords d'attaque de ces derniers, la tangente pouvant former un angle ($\beta$) non nul par rapport à la direction de l'axe général (X) de la turbomachine et/ou
- b) que, dans la direction dudit axe général (X), les fonds des creux du profil à serrations appartiennent au moins pour certains à une première surface transversale audit axe général (X), cette première surface étant positionnée plus en aval ou plus en amont qu'une seconde surface transversale audit axe général (X) à laquelle appartiennent au moins certains des bords d'attaque des secondes aubes (IGV).

Le point a) assure une orientation angulaire favorable du flux d'air par rapport à la forme des IGV ; le point b) assure un guidage poursuivi vers l'aval du flux d'air par rapport à ces mêmes IGV, de sorte que ce flux les attaque alors qu'il glisse encore le long des dents et est donc encore directement orienté par elles.

En termes de formes, il est par ailleurs proposé que les dents et creux du profil à serrations présentent individuellement une forme ondulée, avec des sommets arrondis ou pointus.

L'avantage de sommets arrondis; est que ceci permet d'éviter des concentrations de contraintes mécaniques trop fortes localement et d'obtenir ainsi une meilleure robustesse dans le temps. L'avantage de sommets pointus est qu'il présente un potentiel de réduction de bruit accru.

Selon une autre considération, il est proposé que les dents et creux du profil à serrations présentent individuellement une forme à parois latérales localement rectilignes, avec le même avantage.

Bien que présenté en liaison avec la propulsion d'un aéronef, les caractéristiques de la turbomachine pourraient concerner d'autres applications, terrestres ou maritimes.

L'invention sera si nécessaire mieux comprise et d'autres détails, caractéristiques et avantages de l'invention pourront apparaître à la lecture de la description qui suit faite à titre d'exemple non limitatif en référence aux dessins annexés.

## BRÈVE DESCRIPTION DES FIGURES

Dans ces dessins :

- la figure 1 est un schéma en coupe longitudinale (axe X) d'une turbomachine conventionnelle d'aéronef ;
- la figure 2 schématise la zone amont (bec) de la paroi de séparation entre les flux primaire et secondaire, avec une solution conforme à l'invention ;
- la figure 3 est le détail III de la figure 2 ;
- la figure 4 est le détail IV de la figure 1 ;
- les figures 5-8 schématisent diverses formes de profils à serrations conformes à l'invention ;
- les figures 9-11 schématisent des profils à serrations conformes à l'invention, et des lignes d'écoulement d'air ;
- la figure 12 est une courbe d'évolution de l'énergie cinétique turbulente du flux d'air primaire, K, dans le sillage d'une aube de la soufflante à une hauteur d'aube constante, suivant la direction circonférentielle Y; et
- la figure 13 schématise notamment la courbe d'intensité du flux d'air turbulent suivant la direction circonférentielle Y, entre les aubes de la soufflante amont et un exemple de profils à serrations du bec de séparation des flux ; cette figure représente une coupe à rayon constant faite au niveau du bec.

## DESCRIPTION DÉTAILLÉE

Si l'on se reporte à la figure 1, un turboréacteur 10 d'aéronef 100 est représenté de façon très schématique et est défini comme suit :
La nacelle 12 sert d'enveloppe extérieure aux différents organes, parmi lesquels, à l'avant (gauche sur la figure 1) une soufflante 14 amont (AM).

En aval (AV) de la soufflante 14, le flux d'air (localement schématisé 38 figure 4) est séparé par le bec séparateur 16 d'une paroi annulaire 160 en un flux d'air primaire et un flux d'air secondaire. Le flux d'air primaire parcourt un passage d'air annulaire interne ou veine primaire 18 en pénétrant dans le compresseur basse pression 22 au niveau des aubes directrices d'entrée 24 IGV, dites aussi premières aubes. Le flux d'air secondaire est dévié par le bec séparateur 16 dans un passage d'air annulaire externe 20 (veine secondaire) en direction des aubes directrices de sortie 26 OGV, dites aussi secondes aubes, puis vers la sortie du moteur.

Sur la figure 2, on visualise de façon plus précise la partie avant 161 du bec séparateur 16 comprenant le bord d'attaque 164 situé le plus en amont et au niveau duquel la paroi externe 162 du bec séparateur 16 rejoint la paroi interne 163 du bec séparateur 16, la paroi supérieure 162 formant la virole intérieure de la veine secondaire 20.

A toutes fins, il est précisé que, dans le présent texte, est axial ce qui s'étend suivant ou parallèlement à l'axe longitudinal (X) de rotation de la partie concernée de la turbomachine, lequel axe sera a priori l'axe général de rotation de cette turbomachine. Est radial (axe Z) et est circonférentiel ce qui s'étend radialement à l'axe X et autour de lui, respectivement. Est interne ou intérieur et externe ou extérieur ce qui l'est radialement, vis-à-vis de l'axe X. Ainsi, la paroi interne 163 est la paroi radialement interne du bec séparateur 16. Par ailleurs, les références amont et aval sont à considérer en liaison avec l'écoulement des gaz dans la (partie de) turbomachine considérée : ces gaz entrent à l'amont et sortent à l'aval, en circulant globalement parallèlement à l'axe longitudinal de rotation précité.

En outre, les dessins joints, et les descriptions qui s'y rapportent, ont été définis en référence au repère orthogonal conventionnel X-Y-Z, avec donc l'axe X comme ci-dessus défini.

Le bec séparateur 16 est creux, la face extérieure de la paroi 162 servant de limite radialement interne au passage d'air annulaire externe 20 recevant le flux secondaire tandis que la face intérieure de la paroi 163 sert de limite radialement externe au passage d'air annulaire interne 18 recevant le flux primaire.

La paroi inférieure 163 du bec séparateur 16 forme la virole extérieure du compresseur basse pression 22.

Même si le décalage axial (X) vers l'aval des aubes IGV 24 de sortie 26 par rapport au bord d'attaque 164 du bec séparateur 16 est moindre par rapport à celui des aubes OGV 26 par rapport à ce même bord d'attaque 164, la portion de la partie avant 161 directement adjacente au bord d'attaque 164 du bec séparateur 16 est dégagée.

Pour l'effet induit de gestion aéro-acoustique par limitation du bruit généré par cette zone, on peut donc prévoir que ce bord d'attaque 164 présente un profil 28 à serrations présentant une succession de dents 30 et de creux 32.

Pour réduire la corrélation entre les sources de bruit le long du bord d'attaque à profil à serrations 28, il est proposé de considérer en tout ou partie trois critères à prendre en compte pour les serrations, qui pourrait être de type sinusoïdal ou triangulaire, entre autres, comme le montre les figures.

**• Premier critère : Echelle intégrale de la turbulence.**

Il est proposé d'estimer la longueur d'onde des serrations, $\lambda$, et l'amplitude, $h$, à partir des échelles intégrales de la turbulence.

Plus précisément, on va considérer que le profil 28 à serrations présente des ondulations qui définissent :

- suivant une direction (L) d'allongement du bord d'attaque 164 (figures 2-3), une géométrie élémentaire qui se répète, deux ondulations identiques (ou quasi-identiques, quand deux dents consécutives présentent de petites variations de géométries, à +/- 15%) de deux géométries élémentaires successives, telles que 34, 36 figures 5-6, suivant ladite direction L présentant entre elles, suivant cette direction, une distance, $\lambda$ (en m), et
- une amplitude maximale, h (en m), perpendiculairement à cette direction L.

L'amplitude maximale h est définie comme la distance maximale, suivant l'axe X, entre le sommet - le plus proéminent s'il en existe - des dents 30 et le fond des creux 32 - le plus profond s'il en existe -, comme on le voit figure 5 dans l'hypothèse d'une géométrie élémentaire à plusieurs ondulations, deux de préférence - deux dents 30 différentes et deux creux 32 différents -, avec dans ce cas : $\lambda = \lambda 1 + \lambda 2$.

Selon ce premier critère, on choisira que l'amplitude maximale h soit dimensionnée en respectant la relation :

$$l_{33}^{(3)}/h < 1$$

à 40% près, dans la formule générale :

$$l_{ij}^{(k)} = \int_0^\infty \frac{\langle u_i'(\mathbf{x} + r e_k) u_j'(\mathbf{x}) \rangle}{\langle u_j'(\mathbf{x}) u_j'(\mathbf{x}) \rangle} \mathrm{d}r \qquad (*)$$

avec :

- u'$_i$ (en m/s) qui est la vitesse du flux d'air dans la direction i et entre la soufflante 14 et les aubes IGV 24,
- r qui est la distance (en m) entre deux points du sillage de la soufflante dans la direction k, et
- 

$$l_{33}^{(3)}$$

qui est l'échelle intégrale du flux d'air 38 (figure 4) généré par la soufflante 14 dans la direction de l'axe général de la machine (figure 2) ou de la corde 40 du profil (figure 3).

(*) : Pour tout détail ou explications complémentaires, on se réfèrera à la formule (5) et à ses données associées, telles que publiées dans l'article de la conférence AIAA « Wavy Leading Edge Airfoils Interacting with Anisotropic Turbulence », AIAA 2017-3370 ; page 4/16. Il y est précisé que : $u'_i$ représente la ième composante de ladite vitesse du flux d'air, r est la séparation entre deux points dans la kième direction, $ek$ est un vecteur unitaire dans la kième direction, et $\langle . \rangle$ est l'opérateur moyen d'ensemble (ensemble average operator). Par conséquent,

$$l_{ij}^{(k)}$$

est l'échelle de longueur intégrale (integral length scale) des ième et jème composantes de ladite vitesse dans la kième direction spatiale.

En utilisant ces définitions, la taille des serrations qui sert à optimiser le bruit à large bande d'un profil 28 devra satisfaire :

$$l_{11}^{(1)}/h < 1 \quad \text{et} \quad l_{22}^{(2)}/\lambda \leq 0.5$$

où $l_{11}^{(1)}$ et $l_{22}^{(2)}$ seront les échelles intégrales du flux d'air 38 turbulent dans les directions de la corde 40 du profil (suivant sensiblement ledit axe général donc) et de la direction L d'allongement du bord d'attaque 164, respectivement (cf. figures 5-8 et 13).

Ces valeurs permettent d'optimiser la réduction de bruit à large bande généré par le bec 16 en présence d'un flux d'air turbulent isotrope.

Or, on peut considérer que ceci n'est pas le cas pour le du flux d'air ou sillage 38 de la soufflante 14, qui n'est en réalité pas turbulent isotrope quand celle-ci fonctionne.

Par conséquent, on peut décider d'appliquer le second critère qui suit, seul ou en combinaison avec le premier critère, pour une adaptation favorable aux spécificités opérationnelles d'un bec tel que 164.

• **Deuxième critère : Réduction des creux à rayonnement acoustique maximal.**

Il est par là proposé de réduire le nombre de creux 32 du bord d'attaque 164 qui sont impactés par les sillages individualisés 38, simultanément. La figure 13 permet ainsi d'observer que les niveaux maximaux (zones Im) de l'intensité (ou taux) I du flux d'air 38 se situent dans les sillages que chaque aube 140 de la soufflante 14. Ces niveaux maximaux sont directement liés à l'amplitude du rayonnement acoustique du bec 16.

A cette fin de de réduction du nombre de creux 32, il est d'abord proposé d'appliquer une condition additionnelle à la conception et réalisation du bord d'attaque 164 à profil en serrations afin d'éviter qu'un seul sillage d'aube 140 de la soufflante ait sensiblement simultanément un impact sur deux creux 32 circonférentiellement consécutifs.

Cette condition est donnée par $\lambda > e$, où $e$ correspond à la largeur du sillage - flux d'air 38 généré par la soufflante - en aval d'une aube 140, sensiblement dans sa continuité (voir figure 13). Cette largeur locale du sillage est calculée au point où l'on retrouve la moitié de l'énergie cinétique turbulente maximale, $K_{max}$, dans le sillage de cette aube, face au bord d'attaque 164 du bec 16, comme le montre la figure 12. La valeur $e$ peut être estimée à partir de données d'essais ou à partir du critère $e = l_{22}^{(2)}/0{,}21$ à 40% près. Les échelles intégrales de la turbulence peuvent aussi être estimées à partir de calculs de dynamique des fluides (Computational Fluid Dynamics - CFD).

Ensuite, il est proposé d'appliquer en outre une autre condition pour prendre en compte l'espacement ou distance $d$ entre deux aubes de la soufflante 140 circonférentiellement consécutives ; cf. figure 13 où la distance $d$ est définie entre deux bords de fuite de deux aubes de soufflante consécutives. Le but est d'éviter un rayonnement acoustique maximal de plusieurs creux 32 dû à l'impact du sillage de plusieurs aubes 140 de la soufflante, simultanément. La réduction de bruit devrait être moins efficace si le nombre d'aubes est égal au nombre des creux qui rayonnent le maximum de bruit.

Aussi est-il proposé comme autre condition, pour la périodicité ou l'espacement entre deux dents 30 consécutives, donc pour ladite distance ($\lambda$), que :

e < $\lambda$ ≤ d - e où d/$\lambda$ # 1, 2, 3, ... , avec donc :

- e qui est la largeur (en m) du flux d'air turbulent 38 (appelé "sillage de la soufflante" dans le vocabulaire technique) généré par la soufflante en aval d'une aube 140, ladite largeur étant calculée au point où l'on retrouve la moitié de l'énergie cinétique turbulente maximale, K_max, dans la partie correspondante du flux d'air généré, de préférence face au (ou proche du) bord d'attaque du bec, cf. figure 13 ; e pouvant être estimé à partir du critère $\underline{e} = l_{22}^{(2)}/0{,}21$ , à 40% près (voir formule générale ci-avant), et

- d qui est l'espacement (en m) entre deux aubes 140 de soufflante circonférentiellement consécutives, de préférence au niveau (ou proche) du bord d'attaque du bec, cf. figure 13.

Le critère "e" sera avantageusement calculé au point le plus proche du bord d'attaque du bec.

**• Troisième critère : Positionnement des creux par rapport aux IGVs.**

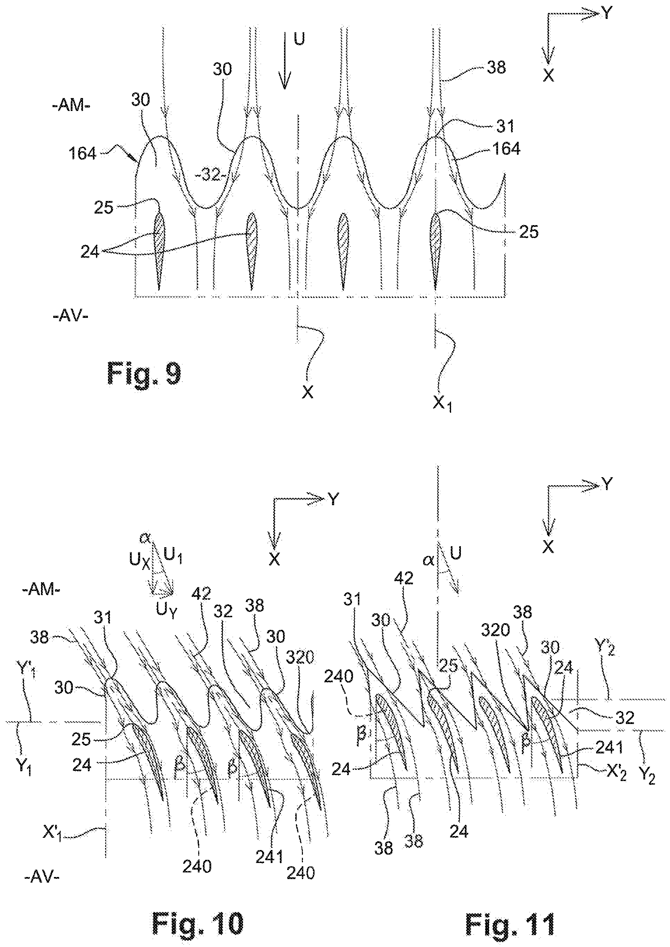

Normalement, l'écoulement 38 contourne le bord d'attaque 164 à serrations au niveau des sommets des dents 30 pour s'accélérer près des fonds des creux 32 ; voir les lignes de courant fléchées schématisées figures 9-11.

Aussi est-il proposé, en substitution ou en complément de tout ou partie des conditions précédentes, d'appliquer une autre condition à la conception et réalisation du bord d'attaque 164 à profil en serrations, à savoir que le nombre de dents 30, de creux 32, ou de périodes λ (voir figures 5-8) de répétition de la géométrie élémentaire sur la longueur (direction L ; donc ici le périmètre) du bord d'attaque 164 du profil à serrations est égal, à 40% près, au nombre des premières aubes IGV. 24

Comme schématisées figures 9-11, placer les IGV 24 dans l'alignement aérodynamique des dents 30, si le nombre d'IGV 24 et de dents 30 au bord d'attaque 164 est dans la proportion ci-dessus, sera aussi favorable.

Ainsi, pour éviter que des zones de turbulence importantes n'impactent le bord d'attaque des IGV dans la zone du carter, est-il proposé qu'autour de l'axe X, certains au moins des creux 32 du profil 28 à serrations soient décalés angulairement (circonférentiellement) par rapport à la position angulaire des aubes IGV 24, de telle sorte que ces creux 32 soient interposés entre deux premières aubes IGV 24 circonférentiellement successives, comme on le voit figures 9-11.

Sur ces figures, les IGV 24 sont même placés axialement (X) dans la continuité des dents 30 ; plus précisément chaque IGV 24 a été placé sensiblement dans l'alignement, suivant l'axe X, du sommet de la dent 30 qui le précède vers l'amont.

Figure 9, cet alignement est parallèle à l'axe général X. Et les dents 30, qui présentent chacune un sommet 31, y sont individuellement symétriques par rapport à une parallèle à l'axe X, cette parallèle passant par le sommet 31 de la dent 30 considérée (voir la parallèle X1 par exemple).

Figures 10-11, les IGV 24 sont inclinés dans le plan X-Y par rapport à l'axe X ; angle β. Les dents 30 peuvent ainsi, circonférentiellement autour de cet axe X, être inclinées chacune du même angle β, dans la même direction que celle, commune, des IGV 24. En alternative, compte-tenu de l'influence de la rotation de la soufflante 14 (voir pointe de flèche dans l'exemple de la figure 2), les dents peuvent être inclinées dans la direction de l'écoulement à l'aval de la soufflante (, qui, comme figures 10-11, peut former un angle α avec l'axe X.

Un angle α et/ou β compris entre 15 et 60° pourrait être approprié, eu égard aux premiers résultats de tests menés. Ceci n'est pas limitatif.

Ainsi, tant les (bords d'attaque des) IGV 24 que les (bords d'attaque des) dents 30 font de fait globalement face au flux d'air 38 dont l'orientation globale oblique U est le résultat de ses composantes Ux suivant X et Uy suivant Y, compte tenu du sens convenu de rotation de la soufflante 14 (flèche S).

En outre, les dents 30 sont individuellement non symétriques axialement par apport à une parallèle (voir X'1 et X'2 figures 10-11) audit axe général X, cette parallèle passant là encore par le sommet 31 de la dent considérée.

Le but de ces positionnements peut être considéré comme double. Premièrement, il s'agit d'éviter l'interaction entre l'écoulement accéléré et turbulent produit dans les creux 32 et le bord d'attaque 25 des IGV (figures 9-11). Ceci peut en effet contribuer de manière significative au bruit du compresseur basse pression 22. Deuxièmement, cette solution technique pourra servir à optimiser l'entrée d'air de ce compresseur basse pression 22 et de réduire les pertes aérodynamiques éventuelles.

Comme montré figures 10-11, lesdites premières aubes/IGV 24 pourront présenter individuellement une ligne 240 de cambrure moyenne le long de leur corde, pour tenir compte de l'influence de la rotation de la soufflante 14.

Dans l'exemple retenu, l'extrados 241 est dirigé vers la direction positive Y, l'intrados du côté opposé.

Dans ces conditions, et encore pour limiter l'impact acoustique sur les IGV 24 du flux d'air tourbillonnant que la soufflante 14 génère donc en aval, il est aussi proposé, comme montré figures 10-11, que les dents 30 soient, circonférentiellement autour dudit axe général X, orientées globalement dans la direction d'une tangente 42 à ladite ligne 240 de cambrure moyenne des aubes IGV 24, au niveau de leurs bords d'attaque 25 pour améliorer l'incidence de l'écoulement relatif impactant les IGVs à proximité du carter de la veine primaire et ainsi limiter les impacts négatifs potentiels en termes de décollements, et/ou les pertes de performances de la grille IGV. Par « globalement », on entend des angles identiques, à 40% près. Comme montré figures 10-11, ladite tangente pourra former un angle (β) non nul, aigu dans le sens de l'écoulement du flux, par rapport à la direction de l'axe général (X) de la turbomachine, elle-même orientée vers l'aval.

Systématiquement, le long de l'axe général X, les dents 30 sont situées en amont par rapport aux bords d'attaque 2 des aubes IGV 24, comme on le constate sur les figures.

Toutefois, pour augmenter la taille des dents, ce qui peut bénéficier à la réduction de bruit, il est proposé que, toujours dans cette direction de l'axe X, les fonds 320 des creux 32 du profil 28 à serrations appartiennent au moins pour certains à une première surface, transversale audit axe X, repérée Y1 figure 10 et Y2 figure 11, positionnée au niveau (figure 10) ou décalée plus en amont (AM) ou en aval (AV ; figure 11) qu'une seconde surface également transversale à l'axe X, repérée Y'1 figure 10 et Y'2 figure 11, à laquelle appartiennent au moins certains des bords d'attaque 25 des aubes IGV 24. Malgré les illustrations, ceci est a priori indépendant de la forme des sommets des dents 30 et des fonds 320 des creux 32. Un positionnement plus en amont serait aussi possible, avec un effet comparable à celui précité.

A ce sujet, les dents 30 et creux 32 du profil 28 à serrations présenteront individuellement une forme ondulée, avec des sommets arrondis (figure 10) ou pointus (figure 11), ceci pour favoriser la réduction du bruit d'impact de l'écoulement d'air généré par les aubes de soufflante, et dans le cas des ondulations, réduire les concentrations de contraintes localement.

Quant à la forme des parois latérales, repérée 300 figure 11 de ces dents 30 et creux 32, elles pourront se présenter individuellement et localement comme rectilignes (figure 11), ceci représentant un autre procédé de réalisation potentiellement performant. Ceci peut permettre d'introduire une certaine décorrélation ou un déphasage entre les sources de bruit le long du bord d'attaque.

**Revendications**

1. Turbomachine à soufflante avant (14) dans laquelle peut circuler un flux d'air d'amont vers l'aval, la turbomachine présentant un axe général (X) autour duquel peut tourner la soufflante avant, qui forme quand elle tourne un sillage en aval, la turbomachine comportant :

   - une paroi (160) annulaire de séparation pourvue d'un bec (16), pour séparer le flux d'air, en aval de la soufflante avant (14), entre un flux primaire et un flux secondaire, le bec (16) présentant un bord d'attaque,
   - des premières aubes (24, IGV) fixes de guidage du flux primaire (Fp),
   - des secondes aubes (26, OGV) fixes de guidage du flux secondaire (Fs), **caractérisé en ce que** le bord d'attaque du bec (16) de la paroi (160) annulaire de séparation présente un profil (28) à serrations présentant une succession de dents (30) et de creux (32) formant des ondulations :
   - qui définissent :

     -- suivant une direction (L) d'allongement du bord d'attaque, une géométrie élémentaire qui se répète, deux ondulations identiques de deux géométries élémentaires (34,36) successives suivant ladite direction (L) présentant entre elles, suivant cette direction, une distance ($\lambda$),
     -- et une amplitude maximale (h), perpendiculairement à ladite direction (L) suivant laquelle le bord d'attaque présente une longueur, et

   - qui obéissent à l'un au moins des critères a), b), c) suivants :

     a) l'amplitude maximale (h) est dimensionnée en respectant la relation :

$$l_{33}^{(3)}/h < 1$$

     à 40% près, dans la formule :

$$l_{ij}^{(k)} = \int_0^\infty \frac{\langle u'_i(\mathbf{x}+r\mathbf{e}_k)u'_j(\mathbf{x})\rangle}{\langle u'_i(\mathbf{x})u'_j(\mathbf{x})\rangle} \mathrm{d}r$$

     avec :

-- u'<sub>i</sub> qui est la vitesse du flux d'air (38) dans une direction i, entre la soufflante avant (14) et les premières aubes (24, IGV),
-- r qui est la distance entre deux points du sillage de la soufflante avant (14) dans une direction k ,
--

$$\int_0^{\infty} \frac{\overline{u'_i(x)u'_i(x+r)}}{\overline{u'_i{}^2}} dr$$

qui est l'échelle intégrale du flux d'air (38) généré par la soufflante avant (14), dans la direction d'une corde (40) du profil, ou parallèlement à l'axe général (X) de la turbomachine,

b) ladite distance ($\lambda$)respecte la relation suivante :
e < $\lambda$ $\leq$ d - e où d/$\lambda$ $\neq$ 1, 2, 3, ... , avec :

-- e qui est la largeur du flux d'air (28) généré par la soufflante avant (14) dans le sillage d'une dite aube (140) de la soufflante avant (14), ladite largeur étant calculée à un point où l'on retrouve la moitié de l'énergie cinétique turbulente maximale, K_max, générée dans ledit sillage; e pouvant être estimé à partir du critère $\underline{e} = l_{22}^{(2)}/0{,}21$ , à 40% près, et
-- d qui est l'espacement entre deux aubes (140) consécutives circonférentiellement de la soufflante avant (14),

c) le nombre de dents (30), de creux (32), ou de répétitions de la géométrie élémentaire sur la longueur du bord d'attaque est égal, à 40% près, au nombre des premières aubes (24, IGV).

2.  Turbomachine selon la revendication 1 dans laquelle :

- les premières aubes (24, IGV) présentent une position angulaire ($\beta$) par rapport à l'axe général (X), et
- autour dudit axe général (X), certains au moins desdits creux (32) du profil (28) à serrations sont décalés angulairement par rapport à la position angulaire ($\beta$) des premières aubes (24, IGV), de telle sorte que lesdits certains au moins des creux (32) soient angulairement interposés entre deux desdites premières aubes (24, IGV) circonférentiellement successives.

3.  Turbomachine selon l'une des revendications précédentes, dans laquelle :

- la soufflante avant (14) est adaptée à tourner dans un sens prédéterminé (Y) autour dudit axe général (X), de sorte que le flux d'air (38) en aval de la soufflante soit globalement orienté obliquement par rapport audit axe général (X), suivant un angle ($\alpha$), et
- les dents (30) sont, circonférentiellement autour dudit axe général (X), inclinées vers ladite orientation globalement oblique ($\alpha$) du flux d'air en aval de la soufflante avant (14), pour lui faire globalement face.

4.  Turbomachine selon l'une des revendications précédentes, dans laquelle :

- les premières aubes (24, IGV) présentent individuellement une ligne (240) de cambrure moyenne et un bord d'attaque (25), et
- les dents (30) sont, circonférentiellement autour dudit axe général (X) et individuellement, orientées globalement dans la direction d'une tangente (42) à la ligne (240) de cambrure moyenne desdites premières aubes (24, IGV) passant par le aux bord d'attaque (25), ladite tangente formant un angle ($\beta$) non nul par rapport à la direction de l'axe général (X) de la turbomachine.

5.  Turbomachine selon l'une des revendications précédentes, dans laquelle :

- les creux (320) du profil (28) à serrations présentent des fonds, et
- dans la direction dudit axe général (X), lesdits fonds des creux (320) appartiennent au moins pour certains à une première surface (Y1,Y2) qui est transversale audit axe général (X) et est positionnée plus en aval ou plus en amont qu'une seconde surface (Y'1,Y'2) transversale audit axe général (X) à laquelle appartiennent au moins certains des bords d'attaque (25) des premières aubes (24, IGV).

6. Turbomachine selon l'une des revendications précédentes, dans laquelle les dents (30) et creux (32) du profil à serrations présentent individuellement une forme ondulée, avec des sommets (31) arrondis ou pointus.

7. Turbomachine selon l'une des revendications précédentes, **caractérisée en ce qu'**elle est adaptée à propulser un aéronef (100).

**Patentansprüche**

1. Strömungsmaschine mit einem vorderen Gebläse (14), in dem ein Luftstrom von stromaufwärts nach stromabwärts fließen kann, wobei die Strömungsmaschine eine Hauptachse (X) aufweist, um die sich das vordere Gebläse drehen kann, das, wenn es sich dreht, stromabwärts einen Nachlauf bildet, wobei die Strömungsmaschine enthält:

- eine ringförmige Trennwand (160), die mit einer Nase (16) versehen ist, um den Luftstrom stromabwärts des vorderen Gebläses (14) in einen Primärstrom und einen Sekundärstrom zu trennen, wobei die Nase (16) eine Vorderkante aufweist,
- erste feststehende Schaufeln (24, IGV) zur Führung des Primärstroms (Fp),
- zweite feststehende Schaufeln (26, OGV) zur Führung des Sekundärstroms (Fs),
**dadurch gekennzeichnet, dass** die Vorderkante der Nase (16) der ringförmigen Trennwand (160) ein Sägezahnprofil (28) aufweist, das eine Folge von Wellen bildenden Zähnen (30) und Vertiefungen (32) aufweist,
- die definieren:

-- in Richtung (L) der Längserstreckung der Vorderkante eine sich wiederholende Grundgeometrie, wobei zwei identische Wellen von zwei Grundgeometrien (34, 36), die in Richtung (L) aufeinander folgen, zwischen sich in dieser Richtung einen Abstand ($\lambda$) aufweisen,
-- und eine maximale Amplitude (h) senkrecht zur genannten Richtung (L), in der die Vorderkante eine Länge aufweist, und

- die mindestens eines der folgenden Kriterien a), b), c) erfüllen:

a) die maximale Amplitude (h) ist so bemessen, dass sie die Beziehung

$$l_{11}^{(1)}/h < 1$$

auf 40 % genau erfüllt in der Formel:

$$l_{ij}^{(k)} = \int\limits_{0}^{\infty} \frac{\langle u_i'(\mathbf{x} + r\mathbf{e}_k)u_j'(\mathbf{x})\rangle}{\langle u_i'(\mathbf{x})u_j'(\mathbf{x})\rangle}\,\mathrm{d}r$$

worin:

-- u'$_i$ die Geschwindigkeit des Luftstroms (38) in einer Richtung i zwischen dem vorderen Gebläse (14) und den ersten Schaufeln (24, IGV) ist,
-- r der Abstand zwischen zwei Punkten des Nachlaufs des vorderen Gebläses (14) in einer Richtung k ist,
--

$$l_{11}^{(1)}$$

die Integralskala des Luftstroms (38) ist, der von dem vorderen Gebläse (14) in Richtung einer Profilsehne (40) oder parallel zu der Hauptachse (X) der Strömungsmaschine erzeugt wird,

b) der Abstand ($\lambda$) erfüllt die folgende Beziehung:
e < $\lambda$ ≤ *d* - *e* worin d/$\lambda$ ≠ 1, 2, 3, ... , wobei:

-- e die Breite des Luftstroms (28) ist, der von dem vorderen Gebläse (14) im Nachlauf einer Schaufel (140) des vorderen Gebläses (14) erzeugt wird, wobei die Breite an einem Punkt berechnet wird, an dem die Hälfte der maximalen turbulenten kinetischen Energie K_max, die in dem Nachlauf erzeugt wird, vorliegt; wobei $\underline{e}$ ausgehend von dem Kriterium $\underline{e} = l_{22}^{(2)}/0{,}21$ auf 40% genau geschätzt werden kann, und

-- $\underline{d}$ der Abstand zwischen zwei in Umfangsrichtung aufeinanderfolgenden Schaufeln (140) des vorderen Gebläses (14) ist,

c) die Anzahl der Zähne (30), Vertiefungen (32) oder Wiederholungen der Grundgeometrie über die Länge der Vorderkante ist auf 40 % genau gleich der Anzahl der ersten Schaufeln (24, IGV).

**2.** Strömungsmaschine nach Anspruch 1, wobei

- die ersten Schaufeln (24, IGV) eine Winkelposition ($\beta$) in Bezug auf die Hauptachse (X) aufweisen, und
- um die Hauptachse (X) herum zumindest einige der Vertiefungen (32) des Sägezahnprofils (28) bezüglich der Winkelposition ($\beta$) der ersten Schaufeln (24, IGV) winkelmäßig versetzt sind, so dass die zumindest einigen der Vertiefungen (32) winkelmäßig zwischen zwei der in Umfangsrichtung aufeinanderfolgenden ersten Schaufeln (24, IGV) angeordnet sind.

**3.** Strömungsmaschine nach einem der vorhergehenden Ansprüche, wobei

- das vordere Gebläse (14) dazu ausgelegt ist, sich in einer vorbestimmten Richtung (Y) um die Hauptachse (X) zu drehen, so dass der Luftstrom (38) stromabwärts des Gebläses insgesamt schräg zur Hauptachse (X) unter einem Winkel ($\alpha$) ausgerichtet ist, und
- die Zähne (30) in Umfangsrichtung um die Hauptachse (X) zu der insgesamt schrägen Ausrichtung ($\alpha$) des Luftstroms stromabwärts des vorderen Gebläses (14) geneigt sind, um ihm insgesamt gegenüber zu liegen.

**4.** Strömungsmaschine nach einem der vorhergehenden Ansprüche, wobei

- die ersten Schaufeln (24, IGV) einzeln eine mittlere Wölbungslinie (240) und eine Vorderkante (25) aufweisen, und
- die Zähne (30) in Umfangsrichtung um die Hauptachse (X) und einzeln insgesamt in Richtung einer Tangente (42) an die durch die Vorderkante (25) verlaufende mittlere Wölbungslinie (240) der ersten Schaufeln (24, IGV) ausgerichtet sind, wobei die Tangente einen Winkel ($\beta$) ungleich Null in Bezug auf die Richtung der Hauptachse (X) der Strömungsmaschine bildet.

**5.** Strömungsmaschine nach einem der vorhergehenden Ansprüche, wobei

- die Vertiefungen (320) des Sägezahnprofils (28) Böden aufweisen, und
- in Richtung der Hauptachse (X) zumindest einige der Böden der Vertiefungen (320) zu einer ersten Fläche (Y1, Y2) gehören, die quer zu der Hauptachse (X) verläuft und weiter stromabwärts oder weiter stromaufwärts positioniert ist als eine zweite Fläche (Y'1, Y'2), die quer zu der Hauptachse (X) verläuft und zu der zumindest einige der Vorderkanten (25) der ersten Schaufeln (24, IGV) gehören.

**6.** Strömungsmaschine nach einem der vorhergehenden Ansprüche, wobei die Zähne (30) und Vertiefungen (32) des Sägezahnprofils einzeln eine Wellenform mit abgerundeten oder spitzen Scheitelpunkten (31) aufweisen.

**7.** Strömungsmaschine nach einem der vorhergehenden Ansprüche, **dadurch gekennzeichnet, dass** sie zum Antreiben eines Luftfahrzeugs (100) geeignet ist.

**Claims**

**1.** Turbomachine having a front fan (14) in which an airflow can circulate from upstream to downstream, the turbomachine having a general axis (X) about which the front fan can rotate, the front fan generating a wake downstream when it rotates, the turbomachine comprising:

- an annular dividing wall (160) having a slat (16), for dividing the airflow downstream of the fan (14) into a primary flow and a secondary flow, the slat (16) having a leading edge,
- first guide vanes (IGV 24) for guiding the primary flow (Fp),
- second guide vanes (OGV 26) for guiding the secondary flow (Fs), **characterised in that** the leading edge of the slat (16) of the annular dividing wall (160) has a serrated profile (28) having a succession of teeth (30) and undulating depressions (32):
- that define:

-- along a direction (L) of elongation of the leading edge, a repeating elementary geometry, two identical undulations of two successive elementary geometries (34, 36) along said direction (L) having between them, along said direction, a distance ($\lambda$),
-- and a maximum amplitude (h), perpendicular to said direction (L) along which the leading edge has a length, and

- which meet at least one of the following criteria a), b), c):

a) the maximum amplitude (h) is dimensioned according to the relation:

$$l_{11}^{(1)}/h < 1$$

to within 40%, in the formula:

$$l_{ij}^{(k)} = \int_0^\infty \frac{\langle u_i'(\mathbf{x} + r\mathbf{e}_k)u_j'(\mathbf{x})\rangle}{\langle u_i'(\mathbf{x})u_j'(\mathbf{x})\rangle}\mathrm{d}r$$

with:

-- $u_i'$ which is the airflow (38) velocity in direction i, between the front fan (14) and the first guide vanes (24, IGV),
-- r which is the distance between two points in the wake of the front fan (14) in a k-direction,
-- $l_{11}^{(1)}$ which is the integral scale of the airflow (38) generated by the front fan (14), in the direction of a chord (40) of the profile, or parallel to the general axis (X) of the turbomachine,

b) said distance ($\lambda$) respects the following relationship:
e < $\lambda$ ≤ d - e where d/$\lambda$ ≠ 1, 2, 3, ... , having:

-- e which is the width of the airflow (28) generated by the front fan (14) in the wake of one of said blades (140) of the front fan (14), said width being calculated at a point where half of the maximum turbulent kinetic energy, K_max, generated in said wake is found; e being estimable from the criterion $\underline{e} = l_{22}^{(2)}/0{,}21$ , to within 40%, and
-- d which is the spacing between two circumferentially consecutive blades (140) of the front fan (14),

c) the number of teeth (30), depressions (32), or repetition periods of the elemental geometry along the length of the leading edge is equal, within 40%, to the number of the first guide vanes (24, IGV).

2. Turbomachine according to claim 1, wherein:

- the first guide vanes (24, IGV) have an angular position ($\beta$) with respect to the general axis (X), and

- around said general axis (X), at least some of said depressions (32) of the serrated profile (28) are angularly offset with respect to the angular position ($\beta$) of the first guide vanes (24, IGV), so that said at least some of the depressions (32) are angularly interposed between two of said first guide vanes (24, IGV) circumferentially successive.

3. Turbomachine according to one of the preceding claims, wherein:

- the front fan (14) is adapted to rotate in a predetermined direction (Y) about said general axis (X) such that the airflow (38) downstream of the fan is generally obliquely oriented with respect to said general axis (X) at an angle ($\alpha$), and
- the teeth (30) are inclined circumferentially around said general axis (X) towards the generally oblique orientation ($\alpha$) of the airflow downstream of the front fan (14), to face it generally.

4. Turbomachine according to one of the preceding claims, wherein:

- the first guide vanes (24, IGV) individually have a camber line (240) and a leading edge (25), and
- the teeth (30) are, circumferentially around said general axis (X) and individually, oriented generally in the direction of a tangent (42) to the camber line (240) of said first guide vanes (24, IGV) passing by the leading edge (25), said tangent forming a ($\beta$) non-zero angle with respect to the direction of the general axis (X) of the turbomachine.

5. Turbomachine according to one of the preceding claims, wherein:

- the depressions (320) of the serrated profile (28) have bottoms, and
- in the direction of said general axis (X), at least some of said bottoms of the depressions (320) belong to a first surface (Y1, Y2) which is transverse to said general axis (X) and is positioned further downstream or upstream than a second surface (Y'1, Y'2) transverse to said general axis (X) to which belong at least some of the leading edges (25) of the first guide vanes (24, IGV).

6. Turbomachine according to one of the preceding claims, in which the teeth (30) and depressions (32) of the serrated profile have individually a wavy shape, having rounded or sharp tops (31).

7. Turbomachine according to one of the preceding claims, **characterized in that** it is adapted to propel an aircraft (100).

Fig. 1

Fig. 3

Fig. 2

Fig. 4

Fig. 5     Fig. 6     Fig. 7     Fig. 8

**Fig. 9**

**Fig. 10**

**Fig. 11**

**Fig. 12**

**Fig. 13**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 101716995 A